Europäisches Patentamt

(19) European Patent Office

Office européen des brevets

(11) Veröffentlichungsnummer: **0 195 825**
**A2**

# EUROPÄISCHE PATENTANMELDUNG

(21) Anmeldenummer: **85101808.5**

(51) Int. Cl.⁴: **B 23 K 26/00**

(22) Anmeldetag: **20.02.85**

(43) Veröffentlichungstag der Anmeldung: **01.10.86**
**Patentblatt 86/40**

(71) Anmelder: **Langen, Robert, Quienstrasse 29, D-6600 Saarbrücken (DE)**

(72) Erfinder: **Langen, Robert, Quienstrasse 29, D-6600 Saarbrücken (DE)**

(84) Benannte Vertragsstaaten: **AT BE CH DE FR GB IT LI LU NL SE**

(74) Vertreter: **Bernhardt, Winfrid, Dr.-Ing., Kobenhüttenweg 43, D-6600 Saarbrücken (DE)**

(54) Verfahren zum Entfernen von Verunreinigungen, insbesondere Rost, von einer Metalloberfläche.

(57) Bei einem Verfahren zum Entfernen von Rost oder anderen Verunreinigungen von einer Metalloberfläche (11) durch Verdampfen des Rostes oder der anderen Verunreinigungen mittels Laserbestrahlung (9) soll die Laserbestrahlung (9) ausgehend von der Reflektion der Laserstrahlung an der freien Metalloberfläche (11) gesteuert (32–35) werden.

EP 0 195 825 A2

ACTORUM AG

**Dr.-Ing. W. Bernhardt**

Patentanwalt

Kobenhüttenweg 43, 6600 Saarbrücken
Telefon (0681) 65000

0195825

- 1 -

Robert Langen, D-6600 Saarbrücken (Bundesrepublik Deutschland)

"Verfahren zum Entfernen von Verunreinigungen, insbesondere Rost, von einer Metalloberfläche"

Die Erfindung betrifft ein Verfahren zum Entfernen von Verunreinigungen, insbesondere Oxidationsprodukten, insbesondere Rost, von einer Metalloberfläche, insbesondere Eisen- oder Stahloberfläche, durch Verdampfen der Verunreinigungen mittels Laserbestrahlung.

Das Entrosten von Stahloberflächen durch Verdampfen des Rostes mittels Laserbestrahlung ist, wie aus der DE-OS 29 43 107 bekannt, überraschenderweise grundsätzlich selektiv möglich, d.h. ohne Verdampfen des Stahles oder auch nur Schädigung der Stahloberfläche durch Gefügeveränderungen. Die Laserstrahlung wird, wenn der Rost verdampft ist, an der Stahloberfläche zum Teil reflektiert. Zum anderen Teil wird die durch die Laserstrahlung an der Stahloberfläche erzeugte Wärme im Stahl verhältnismäßig schnell nach allen Seiten abgeleitet. Eine kurzzeitige hohe Energiezufuhr an einer verhältnismäßig begrenzten Stelle führt daher noch zu keiner zu starken Erhitzung, kann also in Kauf genommen werden. Die nach mechanischem Abtragen des lockeren Rostes zum Verdampfen der verbleibenden Rostschicht benötigte Intensität und Dauer der Laserbestrahlung läßt sich auch mit einem Überschuß so einstellen, daß der Stahl geschont bleibt.

Der Erfindung liegt die Aufgabe zugrunde, das Entrosten von Stahl wie

- 2 -

auch sonst das Reinigen von Metall durch Verdampfen der Verunreinigungen mittels Laserbestrahlung zu beschleunigen und möglichst verlustarm und sicher zu gestalten.

Gemäß der Erfindung wird dieser Zweck dadurch erfüllt, daß die Laserbestrahlung ausgehend von der Reflektion der Laserstrahlung an der freigelegten Metalloberfläche gesteuert wird.
Von besonderer Bedeutung sind die in diesem Rahmen mögliche selbsttätige Steuerung des Vorschubs der Laserbestrahlung entlang der Metalloberfläche und selbsttätige Steuerung der Intensität der Laserbestrahlung:

Ist die Metalloberfläche auf dem bestrahlten Fleck von z.B. 8 x 8 oder 10 x 10 mm vollständig freigelegt, so reflektiert sie einen bestimmten Anteil der Strahlung, der von einem Strahlungsdetektor erfaßt und in einer geeigneten Steuereinrichtung als Schwellwert für den Vorschub des Bestrahlungsflecks auf das nächste Quadrat o.dgl. verarbeitet werden kann. Ein Überschuß an Energie, der einerseits Verlust darstellt und andererseits das Metallgefüge gefährden könnte, kann hier nur auf Teilen des Bestrahlungsflecks auftreten, solange andere Teile noch mit Rost oder einer anderen Schmutzschicht bedeckt sind. Der Überschuß läßt sich noch vermindern durch eine Verkleinerung des Bestrahlungsflecks, die die erfindungsgemäße Steuerung um so eher gestattet, als sie einen verzögerungsfreien und damit im ganzen schnellen selbsttätigen Vorschub ermöglicht; auch spart ein verkleinerter Bestrahlungsfleck Bestrahlungszeit insgesamt, weil er seltener eine längere Bestrahlungszeit bedürfende Stelle berührt.

Eine Steuerung der Intensität kommt, je nach den Verhältnissen, nach unten wie nach oben in Betracht.
Die Eigenschaftsunterschiede zwischen dem Metall und der Verschmutzung können derart sein, daß es besser ist, einen Flächenabschnitt mit besonders hartnäckigem Schmutz kurzzeitig stärker zu bestrahlen, oder, die Strahlungsintensität mit Rücksicht auf das Metall herabzusetzen, obwohl dann die Bestrahlungsdauer noch länger wird. So ist auch eine optimierende Einstellung der Strahlungsintensität auf verschiedene Arten von Verunreinigung möglich. Verteilen sich beispielsweise verschiedene Verunreinigungsmaterialien, ggf. auch unter teilweiser Überdeckung, auf der zu reinigenden Fläche und läßt sich die eine schneller abtragen als die andere, so kann man nach dem Abtragen der einen, wenn die Metalloberfläche auf dem Bestrahlungsfleck eine bestimmte Reflektion zeigt, umstellen von einer für das eine Material besser geeigneten auf eine für das andere Material besser geeignete Strahlungsintensität.

Eine ständige Steuerung der Intensität, auch bis herunter auf null in Form zeitweiligen Abschaltens, kann im übrigen eine Vorschubsteuerung in der Weise ersparen, daß bei gleichbleibendem Vorschub durch die Intensitätssteuerung die Strahlungsmenge dem Erfordernis an der jeweils mit dem Strahl überstrichenen Stelle angepaßt wird.

Eine Vorrichtung zur Durchführung eines erfindungsgemäßen Verfahrens weist nach dem vorstehenden eine Laserbestrahlungseinrichtung auf, die eine durch die Reflektion der Laserstrahlung an der Metalloberfläche gesteuerte Vorschubeinrichtung und/oder Intensitätssteuerung und/oder sonstige Einrichtung aufweist.

Eine andere ausgehend von der Reflektion der Laserstrahlung an der freigelegten Metalloberfläche gesteuerte Einrichtung als die Vorschubeinrichtung und die Intensitätssteuerung könnte beispielsweise für die Behandlung kleiner Werkstücke oder kleiner Oberflächenausschnitte, etwa von der Größenordnung des Bestrahlungsflecks o.ä., eine bloße Vorrichtung zum endgültigen Abschalten sein. In Betracht käme auch eine Einrichtung, die z.B. bei gleichmäßigem Vorschub des Bestrahlungsflecks verbliebene Reste der Verunreinigungen registriert und speichert und in einem zweiten Durchgang derselben oder einer weiteren Bestrahlungseinrichtung nur diejenigen Stellen bestrahlt, an denen solche Reste stehengeblieben sind. Ferner ist an eine Bildauswertung der reflektierten Strahlung derart zu denken, daß der Laserstrahl nach der Bestrahlung einer Grundfläche, wie schon angedeutet z.B. eines Quadrats, stärker gebündelt wird und nur noch einen vergleichsweise kleinen, z.B. runden, Bestrahlungsfleck liefert, der dann speziell auf die innerhalb des ursprünglichen Bestrahlungsflecks verbliebenen Verunreinigungsreste gelenkt wird.
Es sind jedoch noch zahlreiche weitere Abwandlungen denkbar, die Laserbestrahlung anhand ihrer eigenen Reflektion zu steuern.

Zur Erfassung der Reflektion können verschiedene Wege führen.

So kann der Laserstrahl durch einen im Winkel, vorzugsweise von etwa 40 - 50°, zu ihm gestellten, für ihn mindestens weitgehend durchlässigen, Spiegel für die reflektierte Strahlung geführt sein, in dessen Abstrahlungsrichtung ein Laserstrahlungsdetektor angeordnet ist. Ein Spiegel in diesem Sinne ist alles, was immerhin einen verwertbaren Anteil der an der Metalloberfläche reflektierten Strahlung reflektiert, d.h. unabhängig davon, welcher übrige Anteil eventuell durchgelassen wird. Es kann auch ein, vorzugsweise schmaler, Spiegel für die reflektierte Strahlung auf einer, vorzugsweise umlaufenden, Bahn bewegt sein, die durch den Laserstrahl führt, wobei auch hier in der bzw. in einer Abstrahlungsrichtung des Spiegels ein Laserstrahlungsdetektor angeordnet ist. Diese beiden Lösungen erlauben es, den Laserstrahl senkrecht auf die Metalloberfläche zu richten.

Man könnte jedoch auch den Laserstrahl schräg auf die Metalloberfläche richten und in der Abstrahlungsrichtung der Metalloberfläche für den Laserstrahl einen Laserstrahlungsdetektor anordnen.

Auch Ablenkung der reflektierten Strahlung statt Reflektion wäre denkbar, etwa durch einen Ultraschallgeber in derartiger Stellung zu dem auf die Metalloberfläche gerichteten Laserstrahl und der reflektierenden Strahlung, daß er durch Dichteänderungen in der Atmosphäre des Laserstrahlenganges einen Teil der reflektierten Strahlung auf einen Laserstrahlungsdetektor lenkt.

Um die Erfassung der an der Metalloberfläche reflektierten Laserstrahlung in einer vorbeschriebenen oder einer anderen Weise mit genügender Genauigkeit sicherzustellen, kann man eine Zuführung für ein inertes oder reduzierendes Schutzgas zu dem Bestrahlungsfleck zugleich als Spülvorrichtung einrichten.

Die Zeichnung gibt ein Ausführungsbeispiel der Erfindung wieder, und zwar eine Anlage zum Entrosten von Rohren.

Die Zeichnung zeigt dazu in

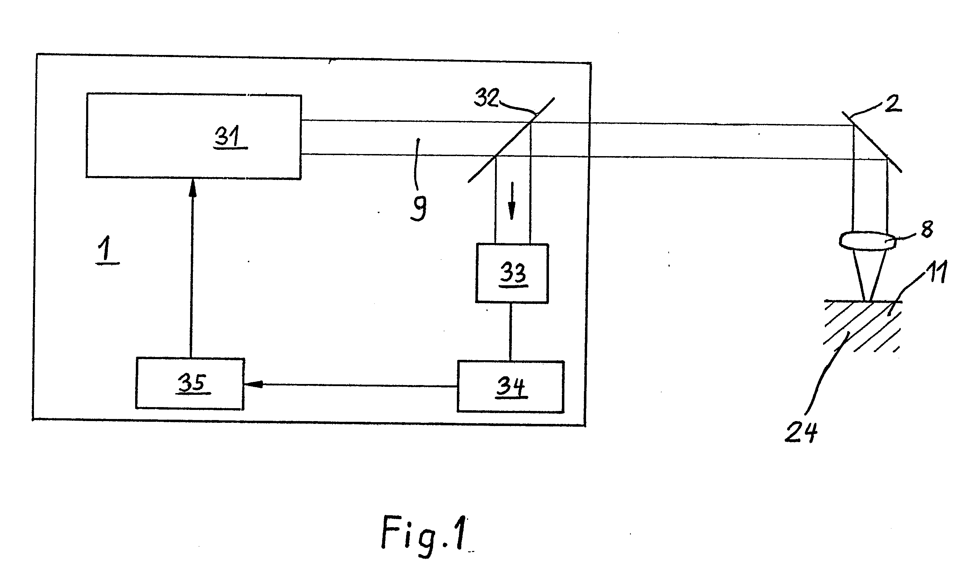

Fig. 1 ein Blockschaubild der Laserstrahlungseinrichtung der Anlage,

Fig. 2 die mechanische Einrichtung der Anlage in Sicht auf das Rohrende und

Fig. 3 in größerem Maßstab eine Einzelheit aus Fig. 2 (Mundstück) in axialem Schnitt.

Der von einem Lasergerät 1 erzeugte Laserstrahl wird in einem Arm 22 seitlich aus dem Lasergerät herausgeführt und nach unten umgewinkelt. Er tritt durch ein Mundstück 7 unmittelbar über der Oberfläche eines zu entrostenden Rohres 24 von z.B. 20 cm Durchmesser aus. Das Rohr 24 liegt auf einer Rollenbank 25, die es kontinuierlich derart dreht und vorschiebt, daß der Brennfleck des Laserstrahls die Rohroberfläche auf einer schraubenlinienförmigen Bahn lückenlos überstreicht. Der Brennfleck hat beispielsweise einen Durchmesser von 5 mm, das Rohr also einen axialen Vorschub von 5 mm pro Umdrehung.

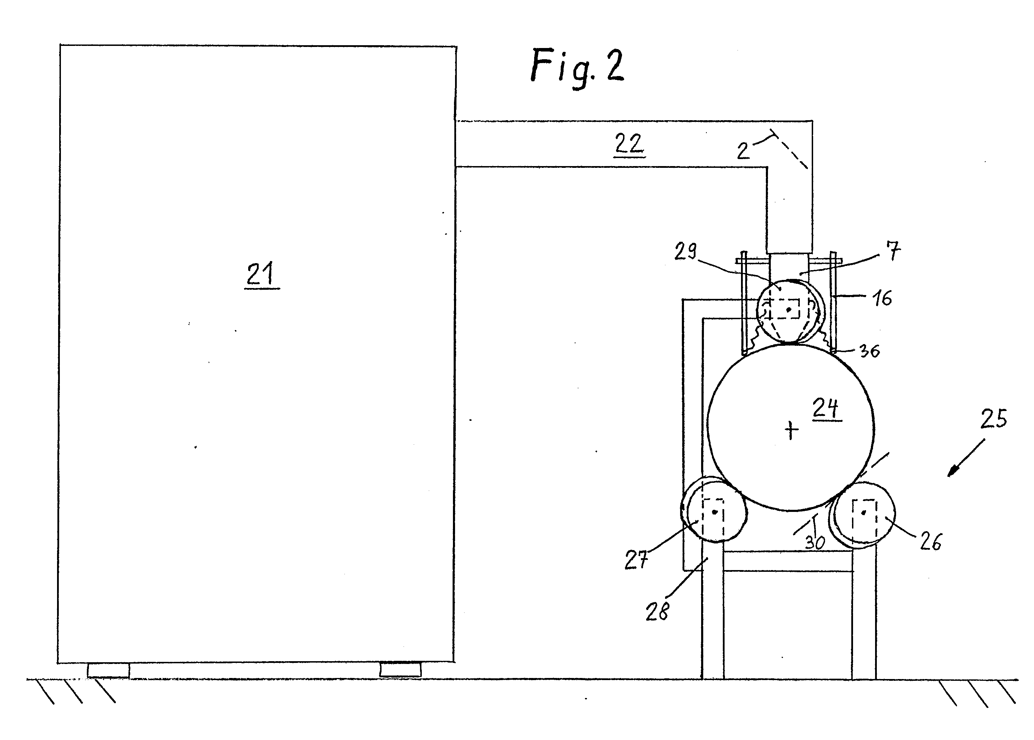

Rollenbänke solcher Art sind an sich bekannt zur Prüfung von Rohren mittels Ultraschall oder anderem.
Sie bestehen aus einer Reihe von je zwei Tragrollen 26 und 27 aufweisenden Böcken 28, die in Abständen miteinander fluchtend angeordnet sind. Das Rohr 24 liegt darauf jeweils zwischen den Tragrollen 26 und 27. Wenigstens ein Teil der Böcke 28 weist außerdem eine Druckrolle 29 auf, die zwischen den Tragrollen 26 und 27 von oben an dem Rohr anliegt.
Ein Teil der Trag- und/oder der Druckrollen 26,27 bzw. 29 ist mit einem nicht gezeichneten Drehantrieb bekannter Art versehen. Mindestens diese angetriebenen Rollen der Rollenbank sind zur Erzeugung des axialen Rohrvorschubs zur Rohrachse schräg angestellt, d.h. die Rollenachse ist innerhalb der im Berührungspunkt an das Rohr gelegten Tangentialebene 30 um einen kleinen Winkel verdreht. Die schräge Anstellung ist in Fig. 2, in der die beiden Tragrollen 26 und 27 und ggf. auch die Druckrolle 29 angetrieben sein sollen, zur Veranschaulichung übertrieben gezeichnet.

Die angetriebenen Rollen können mit einem Belag von gegenüber der Rohroberfläche großem Reibungskoeffizienten versehen sein, damit der Antrieb sicher greift. Sofern nicht angetriebene Rollen zur Vereinfachung nicht oder in keinem dem Vorschub genau entsprechenden Winkel angestellt sind, soll das Rohr auf diesen dagegen in Axialrichtung etwas rutschen.

Um das lückenlose Überstreichen der Rohroberfläche mit dem Brennfleck sicherzustellen, kann man auch eine Zwangsführung einrichten, etwa so, daß der Axialvorschub durch die angetriebenen Rollen etwas zu groß bemessen wird und eine mechanische Halteeinrichtung an dem Rohr angreift, die in Synchronsteuerung mit der Umdrehung den genau bemessenen Vorschub fortlaufend freigibt, und/oder so, daß eine Gewindespindel einerseits fest axial in dem Rohr verklemmt wird und andererseits durch eine feststehende Mutter läuft, wobei die Gewindesteigung gleich der vorgesehenen Steigung der schraubenlinienförmigen Bahn des Brennfleckes auf der Rohroberfläche ist.

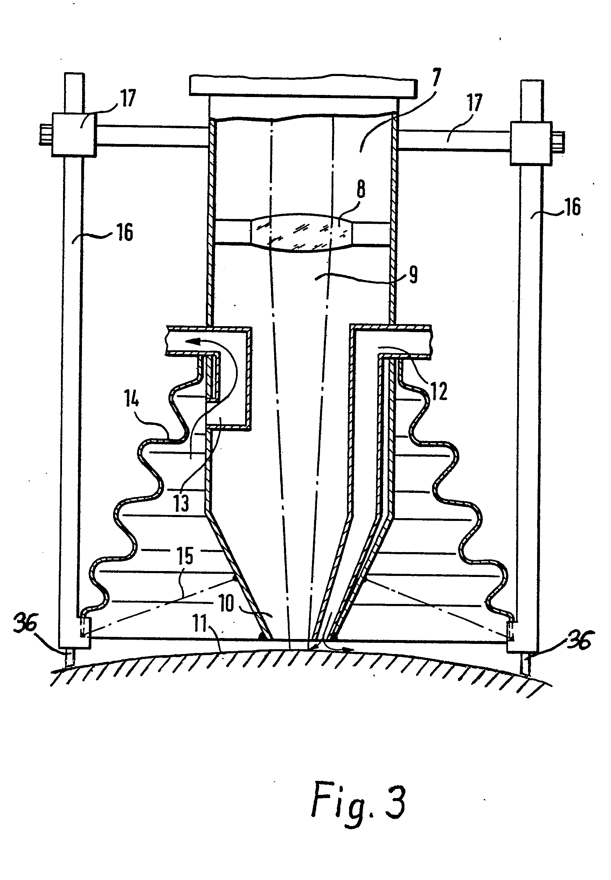

Die insgesamt als Lasergerät 1 bezeichneten Einrichtungen sind in Fig. 2 im einzelnen wiedergegeben. Der mit 31 bezeichnete Laser soll im vorliegenden Beispiel ein $CO_2$-Laser mit einer Hochfrequenzanregung von 13,5 oder 27 MHZ und mit einer Leistung von 25 KW sein. Er sendet einen Laserstrahl 9 von z.B. 50 mm Durchmesser aus. Dieser wird (in dem Arm 22) durch einen Umlenkspiegel nach unten umgewinkelt und in dem Mundstück 7 durch eine Linse 8 (Fig. 3), auf den bereits erwähnten Brennfleckdurchmesser von 5 mm fokussiert. Damit ergibt sich an der zu entrostenden Oberfläche 11 des Rohres 24 eine Strahlungsintensität von $10^7$ Watt/cm$^2$.

Von der freigelegten Metalloberfläche zurückgeworfenes Laserlicht wird durch einen rotierenden Reflektor 32 aus dem Querschnitt des Laserstrahls 9 abgezweigt und auf einen Detektor 33 gegeben.

Der rotierende Reflektor 32 besteht beispielsweise aus einem z.B. 2 mm dicken Kupferstab, der auf einer den Laserstrahl 9 durchschneidenden Kreisbahn mit hoher Geschwindigkeit umläuft. Derartige Einrichtungen sind in verschiedensten Ausführungen bekannt.

Der Detektor 33 ist beispielsweise ein Pyro-Detektor der dem Fachmann unter der Bezeichnung "Molectron P 3" bekannten Konstruktion.

Sein Signal wird über einen Signalverstärker und -verarbeiter 34 in ein Netzgerät 35 für die Anregung und Steuerung der Laserentladung gegeben.

Die Organe 32 bis 35 sind so eingerichtet, daß der Laser 31 auf eine niedrige Intensität zurückgeschaltet oder ganz abgeschaltet wird, sobald das reflektierte Laserlicht diejenige Intensität erreicht hat, die die vollständig freigelegte Metalloberfläche auf dem Brennfleck hervorbringt, und daß der Laser wieder auf volle, kontinuierliche Leistung geschaltet wird, sobald die Intensität des reflektierten Laserlichts wieder unter einen Schwellwert sinkt.

Diese Intensitätssteuerung des Lasers vollzieht sich innerhalb weniger Millisekunden. Im Vergleich dazu ist der Vorschub des Brennfleckes auf der Rohroberfläche langsam. Die Umfangsgeschwindigkeit der Rohrdrehung mag im vorliegenden Beispiel 40 bis 50 m/min oder auch mehr betragen.

Die Größe des Brennflecks mit 5 mm Durchmesser ist mit Rücksicht auf die Roststruktur gewählt. Typisch sind Rostzentren von 1 bis 5 mm Durchmesser.
Die gewählte Intensität von $10^7$ Watt/cm$^2$ erscheint im Hinblick auf eine möglichst hohe Leistung der Auflage einerseits und Schonung des Materials andererseits unter den übrigen Umständen des Beispiels besonders geeignet. Allgemeiner in Betracht zu ziehen ist ein Bereich von $10^6$ bis $10^8$ Watt/cm$^2$.

Es versteht sich, daß die vorstehenden Angaben nicht für jede Entrostungs- oder Reinigungsaufgabe gelten können. Sie geben Anhaltspunkte für übliche Versuche zur Ermittlung jeweils geeigneter konkreter Maßnahmen.

Der mechanische Aufbau der Einrichtung ist weiter im einzelnen in Fig. 3 dargestellt, die das am Ende des Armes 22 angeordnete Mundstück 7, axial aufgeschnitten, zeigt.

Das Mundstück 7 weist die bereits erwähnte Linse 8 für die Fokussierung des Laserstrahls auf, so daß der Laserstrahl unmittelbar hinter dem konischen Ausgang 10 des Mundstücks die gewünschte Brennfleckgröße auf der zu entrostenden Oberfläche 11 des Rohres hat. Eine Schutzgaszuleitung 12 und eine Absaugleitung 13 führen durch das Mundstück 7 hindurch. Die erstere mündet etwa bündig mit dem Mundstück innerhalb desselben. Der Eingang der letzteren liegt weiter zurück an der Außenseite des Mundstücks am hinteren Ende einer das Mundstück umgebenenden, aus einem Balg bestehenden Haube 14. Die Haube 14 kann vorne durch Stege gehalten werden, wie sie bei 15 angegedeutet sind. Im konkreten Falle ist sie jedoch an stangenförmigen Abstandhaltern 16 befestigt, die in starr am Mundstück 7 sitzenden Halterungen 17 verstellbar sind und durch Anlage mit Gleitfüßen 36 an der zu entrostenden Oberfläche 11 das Mundstück 7 einschließlich der Haube 14 im gewünschten Abstand von dieser halten.

Durch Einsatz eines Schwingspiegels wäre es auch möglich, den Laserstrahl derart hin- und herzuschwenken, daß der Brennfleck eine zickzackförmige oder eine mäanderförmige Bahn auf der zu reinigenden Oberfläche beschreibt. Diese Lösung kommt insbesondere für großflächiges Blech, wie an Schiffswänden, in Betracht.

– 1 –

Patentansprüche:

1. Verfahren zum Entfernen von Verunreinigungen, insbesondere Oxidationsprodukten, insbesondere Rost, von einer Metalloberfläche, insbesondere Eisen- oder Stahloberfläche, durch Verdampfen der Verunreinigungen mittels Laserbestrahlung,
dadurch gekennzeichnet,
daß die Laserbestrahlung ausgehend von der Reflektion der Laserstrahlung an der freigelegten Metalloberfläche gesteuert wird.

2. Verfahren nach Anspruch 1,
dadurch gekennzeichnet,
daß ein Vorschub der Laserbestrahlung entlang der Metalloberfläche in der genannten Weise gesteuert wird.

3. Verfahren nach Anspruch 1 oder 2,
dadurch gekennzeichnet,
daß die Intensität der Laserbestrahlung in der genannten Weise gesteuert wird.

4. Vorrichtung zum Durchführen eines Verfahrens nach einem der Ansprüche 1 bis 3,
gekennzeichnet durch eine Laserbestrahlungseinrichtung, die eine durch die Reflektion der Laserstrahlung an der Metalloberfläche (11) gesteuerte Vorschubeinrichtung und/oder Intensitätssteuerung (33,34,35) und/oder sonstige Einrichtung aufweist.

5. Vorrichtung nach Anspruch 4,
dadurch gekennzeichnet,
daß der Laserstrahl durch einen im Winkel, vorzugsweise von etwa
40 - 50°, zu ihm gestellten, für ihn mindestens weitgehend durchlässigen Spiegel für die reflektierte Strahlung geführt ist, in dessen
Abstrahlungsrichtung ein Laserstrahlungsdetektor angeordnet ist.

6. Vorrichtung nach Anspruch 4,
dadurch gekennzeichnet,
daß ein, vorzugsweise schmaler, Spiegel/für die reflektierte Strah-
(32)
lung auf einer, vorzugsweise umlaufenden, Bahn bewegt ist, die
durch den Laserstrahl führt, und daß in der Abstrahlungsrichtung
des Spiegels (32) ein Laserstrahlungsdetektor (33) angeordnet ist.

7. Vorrichtung nach Anspruch 4,
dadurch gekennzeichnet,
daß der Laserstrahl schräg auf die Metalloberfläche gerichtet ist
und in der Abstrahlungsrichtung der Metalloberfläche für den
Laserstrahl ein Laserstrahlungsdetektor angeordnet ist.

8. Vorrichtung nach Anspruch 4,
dadurch gekennzeichnet,
daß ein Ultraschallgeber in derartiger Stellung zu dem auf die
Metalloberfläche gerichteten Laserstrahl und der reflektierten
Strahlung angeordnet ist, daß er durch Dichteänderungen in der
Atmosphäre des Laserstrahlenganges einen Teil der reflektierten
Strahlung auf einen Laserstrahlungsdetektor lenkt.

9. Vorrichtung nach einem der Ansprüche 4 bis 8,
dadurch gekennzeichnet,
daß eine Zuführung (12) für ein inertes oder reduzierendes Schutzgas als Spülvorrichtung eingerichtet ist.

Fig.1

Fig. 2

Fig. 3